# EUROPÄISCHE PATENTSCHRIFT

(11) **EP 0 384 893 B1**
(45) Veröffentlichungstag und Bekanntmachung des Hinweises auf die Patenterteilung: **07.09.1994**
(21) Anmeldenummer: 90810106.6
(22) Anmeldetag: 14.02.1990
(51) Int. Cl.: C09B 45/01, D06P 1/10

(54) **Verfahren zur Herstellung von asymmetrischen 1:2-Metallkomplexfarbstoffen**
Process for the preparation of asymmetrical 1,2-metal complex dyestuffs
Procédé de préparation de colorants complexes asymétriques 1-2, de métal

(30) Priorität: 23.02.1989 CH 654/89
(43) Veröffentlichungstag der Anmeldung: 29.08.1990
(73) Patentinhaber: CIBA-GEIGY AG, 4002 Basel (CH)
(72) Erfinder: Back, Gerhard, Dr., D-7850 Lörrach (DE); Püntener, Alois, Dr., CH-4310 Rheinfelden (CH)

(56) Entgegenhaltungen:
- EP-A- 0 156 768
- EP-A- 0 157 733
- EP-A- 0 260 557
- EP-A- 0 260 562
- EP-A- 0 267 385

## Beschreibung

Die vorliegende Erfindung betrifft ein Verfahren zur Herstellung von einheitlichen asymmetrischen 1:2-Metallkomplexen von Azo- und/oder Azomethinfarbstoffen im Eintopfverfahren, wobei jeder der Azo- und Azomethinfarbstoffe mindestens eine wasserlöslichmachende Gruppe aufweist.

Gegenstand der vorliegenden Erfindung ist somit ein Verfahren zur Herstellung von zu mindestens 85 %, insbesondere 90 %, reinen mindestens zwei wasserlöslichmachende Gruppen enthaltenden asymmetrischen 1:2-Chromkomplexfarbstoffen, dadurch gekennzeichnet, dass man ein Gemisch zweier Farbstoffe der Formeln

F₁-(SO₃H)ₜ (1)

und

F₂-SO₂-Y (2),

worin F₁ und F₂ unabhängig voneinander je für den Rest eines metallisierbaren Azo- oder Azomethinfarbstoffes stehen, Y gegebenenfalls substituiertes Amino, Aryloxy oder Alkyl bedeutet und t 1 oder 2 ist, im molaren Verhältnis von 0,85:1,0 bis 1,2:1,0 in einem Eintopfverfahren mit einem chromabgebenden Mittel unter Druck bei einer Temperatur oberhalb von 100°C und einem pH-Wert zwischen 0 und 2 umsetzt und anschliessend die Umsetzung bei einem leicht sauren, neutralen oder leicht alkalischen pH-Wert weiterführt.

Bevorzugte Ausführungsformen des erfindungsgemässen Verfahrens sind dadurch gekennzeichnet, dass man
a) als Temperatur oberhalb von 100°C eine Temperatur von 100 bis 150°C, insbesondere 125 bis 135°C, wählt;
b) als pH-Wert zwischen 0 und 2 einen pH-Wert von 0 bis 1, insbesondere 0,3 bis 0,7, wählt;
c) für die Weiterführung der Umsetzung bei einem leicht sauren, neutralen oder leicht alkalischen pH-Wert eine Temperatur unterhalb von 100°C, insbesondere von 60 bis 100°C, und vorzugsweise von 90 bis 95°C wählt;
d) als leicht sauren, neutralen oder leicht alkalischen pH-Wert einen pH von 5 bis 10, insbesondere 6 bis 9, wählt;
e) ein Gemisch zweier definitionsgemäss verschiedener metallisierbarer Farbstoffe im molaren Verhältnis von 0,95:1,0 bis 1,05:1,0, insbesondere im Verhältnis von 1:1, verwendet;
f) unter einem Druck von 1 bis 5 bar (entsprechend 100 000 bis 500 000 Pa), vorzugsweise 1 bis 3 bar, chromiert;
g) einen Ueberschuss von 1 bis 5 Mol % an chromabgebendem Mittel verwendet.

Die Umsetzung der metallfreien Farbstoffe mit dem chromabgebenden Mittel erfolgt bevorzugt in wässrigem Medium in einer geschlossenen Apparatur unter Druck.

Als chromabgebende Mittel kommen Chromsalze von anorganischen oder organischen Säuren in Betracht, wie z.B. Chrom(III)-fluorid, Chrom(III)-chlorid, Chrom(III)-carbonat und insbesondere Chromverbindungen aliphatischer oder aromatischer Oxycarbonsäuren, die das Chrom in komplexer Bindung enthalten wie z.B. Milchsäure, Zitronensäure, Glykolsäure, Weinsäure und Salicylsäure. Werden in dem erfindungsgemässen Verfahren anorganische Chromsalze verwendet, so führt man die Chromierung vorzugsweise in Gegenwart katalytischer Mengen von Hilfskomplexverbindungen, wie z.B. Weinsäure, Milchsäure, Zitronensäure oder Glykolsäure oder insbesondere Salicylsäure, durch.

Die Chromierung kann gegebenenfalls in Anwesenheit geeigneter Zusätze, wie z.B. Salze anorganischer oder organischer Säuren, z.B. Natrium- oder Kallumacetat, Natrium- oder Kaliumcarbonat, Natrium- oder Kaliumhydrogencarbonat, erfolgen.

Die Durchführung des erfindungsgemässen Verfahrens ist dadurch gekennzeichnet, dass man zur Chromierung des Reaktionsgemisches den pH-Wert mittels starker Säuren, vorzugsweise anorganischer Säuren, wie z.B. Schwefelsäure auf einen Wert zwischen 0 und 2 einstellt, unter Druck das Reaktionsgemisch auf eine Temperatur oberhalb von 100°C aufheizt und einige Zeit, insbesondere 2 bis 10 Stunden, vorzugsweise 4 bis 8 Stunden, bei dieser Temperatur belässt, anschliessend das Reaktionsgemisch auf eine Temperatur von vorzugsweise unterhalb 100°C abkühlen lässt und durch Zugabe von Alkali, wie z.B. Soda, einen leicht sauren, neutralen oder leicht alkalischen pH-Wert einstellt und die Umsetzung für kurze Zeit, vorzugsweise 10 Minuten bis 3 Stunden, insbesondere 30 bis 90 Minuten, weiterführt. Die Isolierung des zu mindestens 85 % reinen asymmetrischen 1:2-Chromkomplexfarbstoffes kann nach an sich bekannten Methoden erfolgen, wie z.B. Aussalzen, Filtrieren und anschliessender Trocknung.

Die nach dem erfindungsgemässen Verfahren erhaltenen Farbstoffe liegen entweder in der Form ihrer freien Säure oder vorzugsweise als Salze vor.

Als Salze kommen beispielsweise die Alkali-, Erdalkali oder Ammoniumsalze oder die Salze eines organischen Amins in Betracht. Als Beispiele seien die Natrium-, Lithium-, Kalium- oder Ammoniumsalze oder das Salz des Triäthanolamins genannt.

Weitere bevorzugte Ausführungsformen des erfindungsgemässen Verfahrens sind dadurch gekennzeichnet, dass
a) das verwendete Farbstoffgemisch aus zwei Azofarbstoffen besteht und dementsprechend F₁ und F₂ unabhängig voneinander je den Rest eines metallisierbaren Azofarbstoffes bedeuten;
b) das verwendete Farbstoffgemisch aus einem Azo- und einem Azomethinfarbstoff besteht und dementsprechend einer der Variablen F₁ und F₂ für den Rest eines metallisierbaren Azofarbstoffes steht und die andere Variable einen metallisierbaren Azomethinfarbstoff darstellt.

Die in den erfindungsgemässen Verfahren eingesetzten, metallisierbaren Azofarbstoffe bzw. Azomethinfarbstoffe enthalten als metallisierbare Gruppen insbesondere Hydroxyl- und/oder Carboxylgruppen.

Steht Y in den Azo- bzw. Azomethinfarbstoffen der Formel (2) für einen gegebenenfalls substituierten Aminorest, so kann dies ein unsubstituierter oder z.B. durch Alkyl, Cycloalkyl, Aralkyl und/oder Aryl mono- oder disubstituierter Aminorest sein.

Als Alkylsubstituent kommt für den Aminorest Y z.B. ein C₁-C₄-Alkylrest, worunter hier und im weiteren generell der Methyl-, Ethyl-, n- oder iso-Propyl- oder n-, iso-, sec.- oder tert.-Butylrest zu verstehen ist, in Frage. Der C₁-C₄-Alkylrest kann z.B. durch C₁-C₄-Alkoxy oder insbesondere durch Hydroxy weitersubstituiert sein; Beispiele sind der 2-Hydroxyethyl-, 3-Hydroxypropyl-, 2-Methoxyethyl- und 2-Ethoxyethylrest.

Ist der Aminorest Y durch Cycloalkyl substituiert, handelt es sich z.B. um Cyclopentyl, Cycloheptyl und insbesondere um Cyclohexyl.

Trägt der Aminorest Y einen Aralkylsubstituent, so ist dies z.B. ein C₇-C₁₂-Aralkylsubstituent. Beispiele sind Benzyl, Phenylethyl, o, m- oder p-Xylyl.

Als Arylsubstituent kommt für den Aminorest Y z.B. ein Phenylrest, welcher unsubstituiert oder z.B. durch C₁-C₄-Alkyl, C₁-C₄-Alkoxy, Halogen oder Nitro weitersubstituiert ist, in Frage;
C₁-C₄-Alkoxy bedeutet hierbei und im weiteren generell Methoxy, Ethoxy, n- oder iso-Propoxy oder n-, iso-, sec.- oder tert.-Butoxy, während Halogen die Bedeutungen Jod, Brom, Fluor und insbesondere Chlor umfasst.

Steht Y für Aryloxy, handelt es sich z.B. um unsubstituiertes oder z.B. durch C₁-C₄-Alkyl, C₁-C₄-Alkoxy, Halogen oder Nitro substituiertes Phenyloxy.

Bedeutet Y einen Alkylrest, so ist dies z.B. ein C₁-C₄-Alkyl- und vorzugsweise der Methyl- oder Ethylrest.

Y steht vorzugsweise für einen unsubstituierten oder durch C₁-C₄-Alkyl, C₁-C₄-Hydroxyalkyl, Cyclohexyl, C₇-C₁₂-Aralkyl oder gegebenenfalls durch C₁-C₄-Alkyl, C₁-C₄Alkoxy, Halogen oder Nitro substituiertes Phenyl mono- oder disubstituierten Aminorest.

Besonders bevorzugt stellt Y einen Rest der Formel 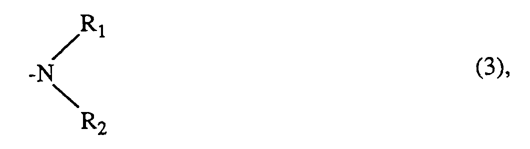
worin R₁ Wasserstoff oder C₁-C₄-Alkyl und R₂ Wasserstoff, C₁-C₄-Alkyl, C₁-C₄-Hydroxyalkyl oder gegebenenfalls durch Methyl, Methoxy, Chlor oder Nitro substituiertes Phenyl sind, dar.

In einer besonders bevorzugten Ausführungsform des erfindungsgemässen Verfahrens verwendet man einen Azo- bzw. Azomethinfarbstoff, worin Y den Rest -NH₂ bedeutet.

Die in dem erfindungsgemässen Verfahren eingesetzten metallisierbaren Azofarbstoffe sind vorzugsweise Mono- oder Disazofarbstoffe, die Diazokomponenten und Kupplungskomponenten der Benzol-, Naphthalin- oder heterocyclischen Reihe enthalten.

Vorzugsweise verwendet man in dem erfindungsgemässen Verfahren ein Gemisch der Azofarbstoffe, die in Form der freien Säure den Formeln 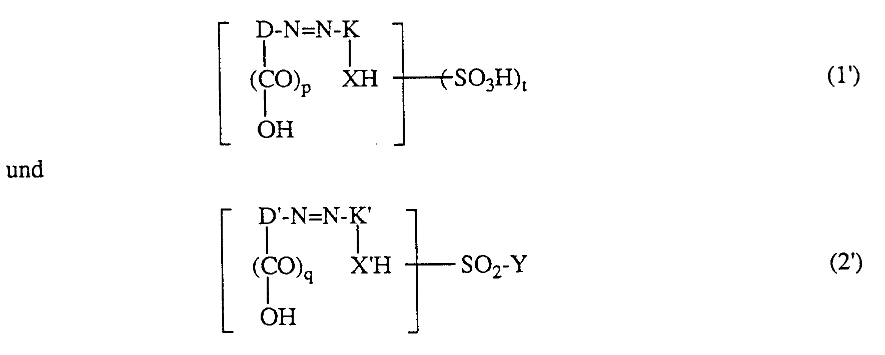
entsprechen,
worin D und D' unabhängig voneinander je den Rest einer Diazokomponente der Benzol- oder Naphthalinreihe mit zur Azogruppe o-ständiger Hydroxy- oder Carboxygruppe bedeuten, K und K' unabhängig voneinander je den Rest einer Kupplungskomponente der Benzol- oder Naphthalinreihe oder der heterocyclischen Reihe darstellen, wobei die Kupplungskomponente die Gruppe -XH bzw. -X'H in o-bzw. α-Stellung zur Azogruppe aufweist, die Gruppen -XH und -X'H unabhängig voneinander -OH oder -NHR, worin R Wasserstoff oder C₁-C₄-Alkyl ist, bedeuten, p und q unabhängig voneinander für 0 oder 1 stehen und für Y und t die zuvor angegebenen Bedeutungen und Bevorzugungen gelten.

In den Formeln (2) und (3) bedeuten die Reste -XH und -X'H vorzugsweise jeweils eine Hydroxygruppe -OH.

Die Diazoreste D und D' leiten sich z.B. von einem 1- oder 2-Naphthylamin oder Aminobenzol ab, wobei die genannten aromatischen Amine in o-Stellung zur Aminogruppe eine Hydroxy- oder Carboxygruppe aufweisen und darüberhinaus durch einen oder mehrere gleiche oder verschiedene Reste weitersubstituiert sein können.

Geeignete Substituenten am Phenyl- oder Naphthylrest D und D' sind ausser -SO₃H bzw. -SO₂-Y z.B.: Nitro, Halogen, wie z.B. Fluor, Chlor und Brom, Alkylgruppen, insbesondere C₁-C₄-Alkylgruppen wie z.B. Methyl, Ethyl, n- oder iso-Propyl oder n-, iso-, sec.- oder tert.-Butyl, Alkoxygruppen, insbesondere C₁-C₄-Alkoxygruppen wie z.B. Methoxy, Ethoxy, n- oder iso-Propoxy oder n-, iso-, sec.- oder tert.-Butoxy.

p und q stehen vorzugsweise jeweils für die Zahl 0.

Vorzugsweise handelt es sich bei D um den Rest eines 2-Amino-1-naphthols oder 1-Amino-2-naphthols und insbesondere um den Rest eines 2-Aminophenols, wobei die genannten aromatischen Amine gegebenenfalls z.B. durch Sulfo, Nitro, Chlor, Methyl oder Methoxy weitersubstituiert sein können.

D' stellt vorzugsweise den Rest eines 1-Amino-2-naphthols oder 2-Amino-1-naphthols und insbesondere den Rest eines 2-Aminophenols dar, welcher jeweils unsubstituiert oder z.B. durch Nitro, Chlor, Methyl, Methoxy oder -SO₂-Y, wobei Y die zuvor angegebene Bedeutung hat, weitersubstituiert ist.

Beispiele für geeignete Diazokomponenten, die den Resten D und D' zugrunde liegen können, sind:
4- oder 5-Sulfamoyl-2-aminophenol, 4- oder 5-N,N-Dimethylsulfamoyl-2-aminophenol, 6-Nitro-4-sulfo-2-aminophenol, 6-Sulfo-4-nitro-2-aminophenol, 4-, 5- oder 6-Nitro-2-aminophenol, 4- oder 5-Chlor-2-aminophenol, 4,6-Dichlor-2-aminophenol, 4-Chlor-5-oder -6-nitro-2-aminophenol, 4-Nitro-6-chlor-2-aminophenol, 6-Nitro-4-sulfamoyl-2-aminophenol, 1-Amino-2-hydroxynaphthalin, 1-Amino-2-hydroxynaphthalin-4-sulfonsäure, 6-Nitro-1-amino-2-hydroxynaphthalin-4-sulfonsäure, 4-Chlor-6-sulfo-2-aminophenol.

Bei den den Resten K und K' zugrunde liegenden Kupplungskomponenten handelt es sich z.B. um ein Phenol, Resorcin, 1-oder 2-Naphthol, 1-Phenyl- oder 1-Naphthylpyrazol-5-on, 6-Hydroxy-3-cyano- oder 6-Hydroxy-3-carbamoylpyrid-2-on, Acetessigsäureanilid, Benzoylessigsäureanilid, 4'-Hydroxynaphtho-(2',-1':4,5)oxathiazol-S-dioxid oder um ein 1- oder 2-Naphthylamin, wobei die genannten Kupplungskomponenten ausser durch -SO₃H bzw. -SO₂-Y z.B. durch C₁-C₄-Alkyl, C₁-C₄-Alkoxy, Nitro, Halogen, Hydroxy, C₂-C₄-Alkanoylamino, z.B. Acetylamino oder Propionylamino, Benzoylamino, C₂-C₄-Alkoxycarbonylamino, z.B. Methoxy- oder Ethoxycarbonylamino, C₁-C₂-Alkylsulfonylamino und/oder im Phenylteil gegebenenfalls durch Methyl, Methoxy oder Chlor substituiertes Phenylamino weitersubstituiert sein können.

Die Reste K und K' leiten sich unabhängig voneinander bevorzugt von einem 1- oder 2-Naphthol, welches unsubstituiert oder durch Methyl, Chlor, Acetylamino, Methylsulfonylamino, Phenylamino, 2-, 3- oder 4-Methylphenylamino, 2-, 3- oder 4-Methoxyphenylamino und/oder insbesondere durch einen Rest -SO₃H oder -SO₂-Y substituiert ist oder von einem 1-Phenyl-3-methylpyrazol-5-on oder Acetessigsäureanilid, deren Phenylrest jeweils unsubstituiert oder z.B. durch C₁-C₄-Alkyl, C₁-C₄-Alkoxy, Chlor, Nitro und/oder Sulfo bzw. -SO₂-Y substituiert ist, ab.

Beispiele für geeignete Kupplungskomponenten, die den Resten K bzw. K' zugrunde liegen können, sind:
1-Phenyl-3-methylpyrazol-5-on, 1-(2-, 3- oder 4-Methylphenyl)-3-methyl-pyrazol-5-on, 1-(2-, 3- oder 4-Sulfamoylphenyl)-3-methyl-pyrazol-5-on, 1-(2-, 3- oder 4-Sulfophenyl)-3-methylpyrazol-5-on, 1-(2-, 3oder 4-Chlorphenyl)-3-methylpyrazol-5-on, Acetoacetanilid, Acetoacetanilid-3- oder -4-sulfonsäure, Acetoacetanilid-3- oder 4-sulfonamid, Acetoacetanilid-3- oder 4-N,N-dimethylsulfonamid, Acetoacet-2-, 3- oder 4-methylanilid, 1- oder 2-Naphthol, 3-, 4- oder 5-Sulfamoyl-1-naphthol, 3-, 4- oder 5-N,N-Dimethylsulfamoyl-1-naphthol, 4'-Hydroxynaphtho-(2',-1':4,5)oxathiazol-S-dioxid, 5,8-Dichlor-1-hydroxynaphthalin, 1-Hydroxynaphthalin-4-, -5- oder 8-sulfonsäure, 2-Hydroxynaphthalin-4-, -5-, -6- oder 7-sulfonsäure, 4-Methyl-1-hydroxynaphthalin, 8-Acetylamino-2-hydroxynaphthalin, 6-Phenylamino-1-hydroxynaphthalin-3-sulfonsäure, 6-(4-Methoxyphenylamino)-1-hydroxynaphthalin-3-sulfonsäure, 8-Methylsulfonylamino-2-hydroxynaphthalin, 1-Hydroxynaphthalin-4- oder -5-N,N-diethylsulfonamid, 1-Hydroxynaphthalin-4- oder -5-N-methylsulfonamid, 1-Hydroxy-3-, -4- oder -5-hydroxyethylsulfonylnaphthalin, 1-Hydroxy-4- oder -5-N-hydroxyethylsulfonamid.

Eine bevorzugte Ausführungsform des erfindungsgemässen Verfahrens ist dadurch gekennzeichnet, dass man ein Gemisch der Azofarbstoffe der zuvor angegebenen Formeln (1') und (2') verwendet, worin -K-XH und -K'-X'H unabhängig voneinander je einen Rest der Formel 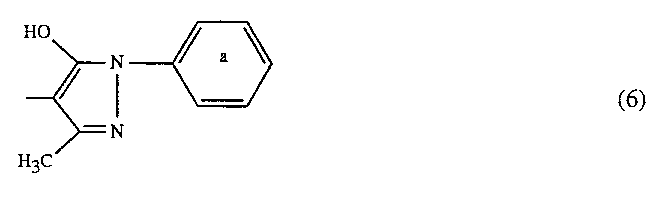
entsprechen, worin der Phenylrest (a) unsubstituiert oder z.B. durch C₁-C₄-Alkyl, C₁-C₄-Alkoxy, Nitro, Halogen und/oder im Fall von -K-XH durch Sulfo und im Fall von -K'-X'H durch einen Rest -SO₂-Y substituiert ist; der Phenylrest (a) in Formel (6) ist hierbei bevorzugt jeweils unsubstituiert oder durch Methyl, Methoxy, Chlor und/oder im Fall von -K-XH durch Sulfo und im Fall von -K'-X'H durch Sulfamoyl, N,N-Dimethylsulfamoyl, N,N-Diethylsulfamoyl, N-Methyl- oder N-Ethylsulfamoyl oder Methylsulfonyl substituiert.

Eine weitere bevorzugte Ausführungsform des erfindungsgemässen Verfahrens ist dadurch gekennzeichent, dass man ein Gemisch der Azofarbstoffe der zuvor angegebenen Formeln (1') und (2') verwendet, worin -K-XH und -K'-X'H unabhängig voneinander je einen Rest der Formel 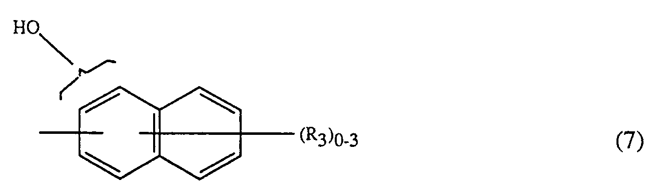
entsprechen, worin R₃ für 0 bis 3 gleiche oder verschiedene Substituenten ausgewählt aus der Gruppe C₁-C₄-Alkyl, Halogen, Hydroxy, C₂-C₄-Alkanoylamino, Benzoylamino, C₁-C₂-Alkylsulfonylamino, unsubstituiertes oder im Phenylteil durch Methyl, Methoxy oder Chlor substituiertes Phenylamino und im Fall von -K-XH Sulfo sowie im Fall von -K'-XH dem Rest -SO₂-Y steht; der Naphtholrest der Formel (7) ist hierbei vorzugsweise jeweils unsubstituiert oder durch Methyl, Chlor, Acetylamino, Methylsulfonylamino, Phenylamino, 2-, 3- oder 4-Methylphenylamino, 2-, 3- oder 4-Methoxyphenylamino und/oder im Fall von -K-XH durch Sulfo und im Fall von -K'-X'H durch Sulfamoyl, N,N-Dimethyl- oder N,N-Diethylsulfamoyl, N-Methyl- oder N-Ethylsulfamoyl, N-2-Hydroxyethylsulfamoyl oder Methylsulfonyl substituiert.

Eine besonders bevorzugte Ausführungsform des erfindungsgemässen Verfahrens ist dadurch gekennzeichnet, dass man ein Gemisch der Azofarbstoffe, die in Form der freien Säure den Formeln 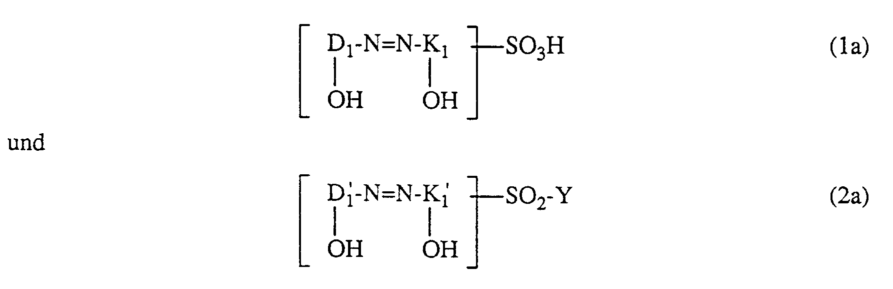
entsprechen, verwendet, worin D₁ und D'₁ unabhängig voneinander den Rest eines 2-Aminophenols, 1-Amino-2-naphthols oder 2-Amino-1-naphthols, wobei die genannten aromatischen Amine unsubstituiert oder z.B. durch Nitro, Chlor, Methyl oder Methoxy weitersubstituiert sein können, bedeuten, K₁ und K'₁ unabhängig voneinander
a) je einen Rest der Formel 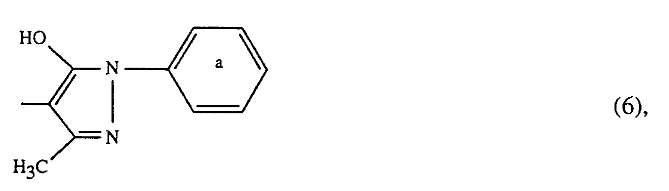 worin der Phenylrest (a) unsubstituiert oder durch C₁-C₄-Alkyl, C₁-C₄-Alkoxy, Nitro oder Halogen substituiert ist, oder
b) je einen Rest der Formel 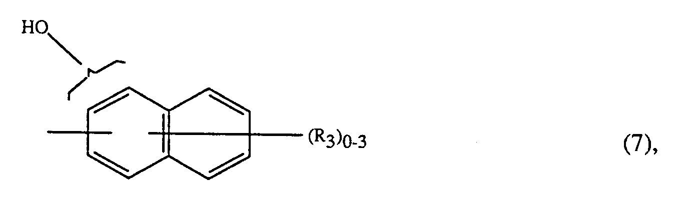 worin R₃ für 0 bis 3 Substituenten ausgewählt aus der Gruppe C₁-C₄-Alkyl, Halogen, C₂-C₄-Alkanoylamino, Benzoylamino, C₁-C₂-Alkylsulfonylamino oder unsubstituiertes oder durch Methyl, Methoxy oder Chlor substituiertes Phenylamino steht, bedeuten, und für Y die zuvor angegebenen Bedeutungen und Bevorzugungen gelten, und worin der Rest D₁ oder K₁ die Sulfogruppe und der Rest D'₁ oder K'₁ die -SO₂-Y-Gruppe trägt.

Eine weitere Variante des erfindungsgemässen Verfahrens besteht darin, ein Gemisch der Ausgangsfarbstoffe der Formeln 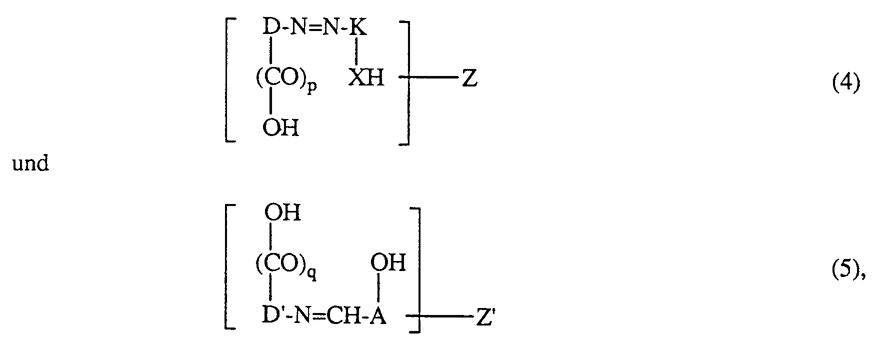
worin D, D', K, X, p und q die zuvor angegebene Bedeutung haben, einer der Reste Z und Z' Sulfo und der andere eine Gruppe -SO₂-Y, worin Y die zuvor angegebene Bedeutung hat, darstellt, und A der Rest eines unsubstituierten oder z.B. durch C₁-C₄-Alkyl, C₁-C₄-Alkoxy, Halogen oder Nitro substituierten 2-Hydroxybenzaldehyds oder 2-Hydroxy-1-naphthaldehyds ist, einzusetzen.

Es ist weiterhin möglich, im erfindungsgemässen Verfahren ein Gemisch aus einem metallisierbaren Azofarbstoff, einem aromatischen Amin und einem o-Hydroxyaldehyds, das den zuvor genannten Anforderungen entspricht, zu verwenden.

Die im erfindungsgemässen Verfahren eingesetzten Azo- und Azomethinfarbstoffe sind bekannt oder können nach an sich bekannten Methoden hergestellt werden.

So erfolgt die Diazotierung der an sich bekannten Diazokomponenten z.B. in wässrigem oder wässrig-organischem Medium vorzugsweise bei niedrigen Temperaturen, z.B. bei -5 bis 30°C durch Einwirken von Nitriten wie z.B. Alkalinitriten, insbesondere Natriumnitrit, in wässrig-mineralsaurer Lösung. Die Kupplung der solchermassen diazotierten Diazokomponenten auf die an sich bekannten Kupplungskomponenten findet vorzugsweise ebenfalls bei niedrigen Temperaturen, z.B. bei 0 bis 30°C, und bei einem sauren, neutralen oder alkalischen pH-Wert statt.

Für die Herstellung der Azomethinfarbstoffe werden in bekannter Weise aromatische Amine z.B. mit o-Hydroxybenzaldehyden oder o-Hydroxynaphthaldehyden kondensiert.

Eine weitere Ausführungsform des erfindungsgemässen Verfahrens ist dadurch gekennzeichnet, dass man vor der Chromierung bei pH 0 bis 2 ein Gemisch der weiter oben definierten metallisierbaren Ausgangsfarbstoffe im molaren Verhaltnis von 0,85:1,0 bis 1,2:1,0 in einem Eintopfverfahren mit einem chromabgebenden Mittel bei pH 3 bis 4 vorbehandelt, und anschliessend die Umsetzung wie oben beschrieben, d.h. unter Druck bei einer Temperatur oberhalb von 100°C und einem pH zwischen 0 und 2 und dann bei schwach saurem, neutralem oder schwach alkalischem pH weiterführt.

Ein Vorteil der beschriebenen Vorbehandlung des erfindungsgemässen Verfahrens ist, dass insbesondere bei Ausgangsfarbstoffen, die sich nur sehr langsam bei einem pH von 0 bis 2 mit einem chromabgebenden Mittel umsetzen lassen, durch die Vorbehandlung bei pH 3 bis 4 eine Verkürzung der Reaktionszeit erzielt wird.

Die nach dem erfindungsgemässen Verfahren erhaltenen, asymmetrischen 1:2-Chromkomplexfarbstoffe zeichnen sich durch eine hohe Produktreinheit aus, wie sie bisher nur von nach der Anlagerungsmethode hergestellten Komplexen bekannt ist.

Insbesondere bei einem molaren Verhältnis von 1:1 der Mischungspartner werden nach dem erfindungsgemässen Verfahren 1:2-Chromkomplexe mit über 85 %iger Reinheit erhalten. Abweichungen von dem molaren Verhältnis von 1:1 der Mischungspartner dienen zur Einstellung der gewünschten Nuance.

Die nach dem erfindungsgemässen Verfahren erhaltenen, asymmetrischen 1:2-Chromkomplexazofarbstoffe bzw. 1:2-Chromkomplexazoazomethinfarbstoffe eignen sich zum Färben und Bedrucken verschiedenster Stoffe, vor allem aber zum Färben tierischer Materialien, wie Seide, Wolle und insbesondere Leder, aber auch zum Färben und Bedrucken synthetischer Fasern aus Superpolyamiden, Superpolyurethanen oder Polyacrylnitril. Sie sind vor allem zum Färben aus schwach alkalischem, neutralem oder schwach saurem, vorzugsweise essigsaurem Bad geeignet. Die so erhaltenen Färbungen sind gleichmässig und haben gute Allgemeinechtheiten, insbesondere gute Licht- und Nassechtheiten.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1: 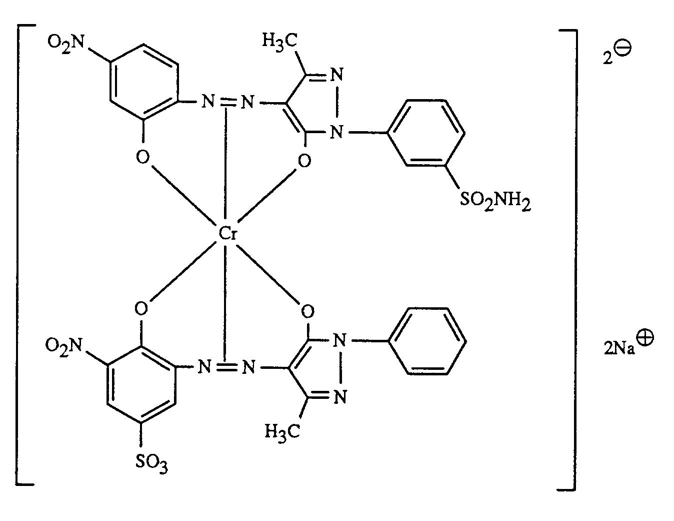
10,5 Teile des Azofarbstoffes 6-Nitro-4-sulfo-2-aminophenol → 1-Phenyl-3-methylpyrazol-5-on und 10,5 Teile des Azofarbstoffes 5-Nitro-2-aminophenol → 1-(3'-Sulfamoylphenyl)-3-methylpyrazol-5-on werden in 200 Teilen Wasser suspendiert, 0,5 Teile Salicylsäure zugegeben und das Gemisch mit 50 %iger H₂SO₄ auf einen pH-Wert von ca. 0,8 eingestellt. Nach der Zugabe von 4,2 Teilen Chrom(III)-sulfat wird die Mischung im Autoklav auf ca. 130°C erhitzt, wobei sich ein Innendruck von ca. 1,8-2,0 bar einstellt, und 6 Stunden bei dieser Temperatur belassen. Anschliessend wird die Mischung abgekühlt und mit 30 %iger Natriumhydroxidlösung auf pH 9 gestellt. Man lässt noch 1 bis 2 Stunden bei 90 bis 95°C rühren und dampft dann die Lösung zur Trockne ein. Der erhaltene Farbstoff besteht zu 90 % aus dem reinen asymmetrischen Komplex. Der Farbstoff färbt Leder in einer roten Nuance mit guten Allgmeinechtheiten.

Beispiel 2: 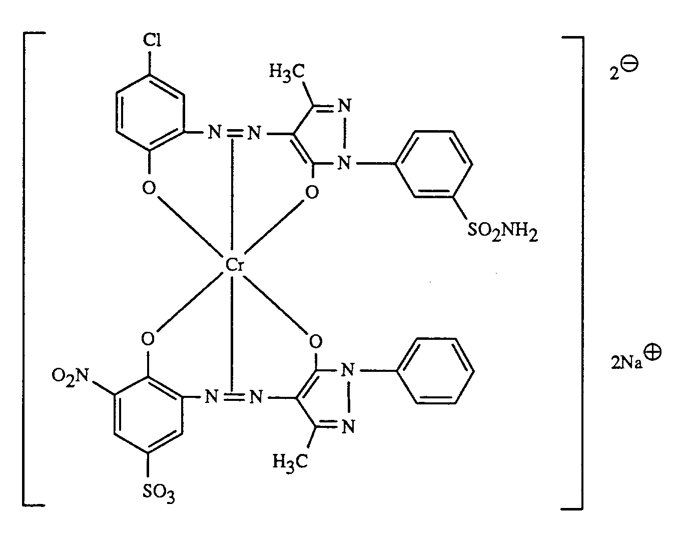
10,5 Teile des Azofarbstoffes 6-Nitro-4-sulfo-2-aminophenol → 1-Phenyl-3-methylpyrazol-5-on und 10,2 Teile des Azofarbstoffes 4-Chlor-2-aminophenol → 1-(3'-Sulfamoylphenyl)-3-methylpyrazol-5-on werden in 200 Teilen Wasser suspendiert, 0,5 Teile Salicylsäure zugegeben und das Gemisch mit 50 %iger H₂SO₄ auf einen pH-Wert von ca. 0,8 eingestellt. Nach der Zugabe von 4,2 Teilen Chrom(III)-sulfat wird die Mischung im Autoklav auf ca. 130°C erhitzt, wobei sich ein Innendruck von ca. 1,8-2,0 bar einstellt, und 6 Stunden bei dieser Temperatur belassen. Anschliessend wird die Mischung abgekühlt und mit 30 %iger Natriumhydroxidlösung auf pH 8,5-9 gestellt. Man lässt noch ca. 2 Stunden bei 90 bis 95°C rühren und dampft dann die Lösung zur Trockne ein. Der nach dem Trocknen im Vakuum erhaltene Farbstoff besteht zu 95 % aus dem reinen asymmetrischen Komplex. Der Farbstoff färbt Wolle sowie Leder in einer roten Nuance mit guten Allgemeinechtheiten.

Beispiel 3: Verfährt man wie im Beispiel 2 beschrieben, und verwendet anstelle der an erster Stelle genannten Azoverbindung den Azofarbstoff aus diazotierter 4-Nitro-2-aminophenol-6-sulfonsäure und 1-Phenyl-3-methylpyrazol-5-on, so erhält man einen analogen asymmetrischen 1:2-Metallkomplexfarbstoff, der Wolle und Leder in einer gelbstichigorangen Nuance mit vergleichbaren Allgemeinechtheiten färbt.

Beispiel 4: 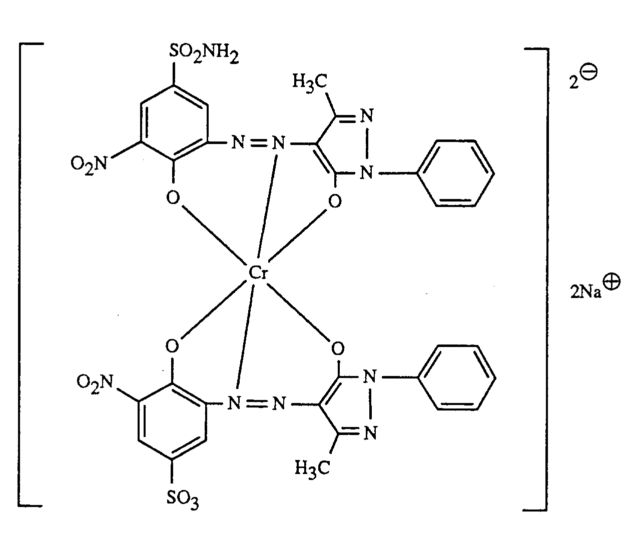
10,47 Teile des Azofarbstoffes aus diazotierter 6-Nitro-2-aminophenol-4-sulfonsäure und 1-Phenyl-3-methylpyrazol-5-on sowie 10,45 Teile des Azofarbstoffes aus diazotiertem 6-Nitro-2-aminophenol-4-sulfosäureamid und 1-Phenyl-3-methylpyrazol-5-on werden unter Zugabe von 0,5 Teilen Salicylsäure in 200 Teilen Wasser suspendiert. Die Mischung wird mit 50%iger Schwefelsäure auf einen pH-Wert von 0,6-0,8 gestellt, mit 4,15 Teilen Chromsulfat versetzt und anschliessend während 8 Stunden im Autoklaven auf 130°- 135°C erhitzt, wobei sich ein Innendruck von 2 bar einstellt. Nach Abkühlen der Reaktionsmasse auf ca. 90°C wird durch Zugabe von 30%iger Natriumhydroxidlösung ein pH-Wert von 8,5-9,0 eingestellt, wobei eine klare, rote Lösung entsteht. Nach 2 Stunden Rühren bei 90-95°C wird der Farbstoff durch Einengen im Vakuum bis zur Trockne isoliert. Auf Wolle oder Leder werden mit dem Farbstoff scharlachrote Färbungen mit guten Allgemeinechtheiten erhalten.

Beispiel 5: 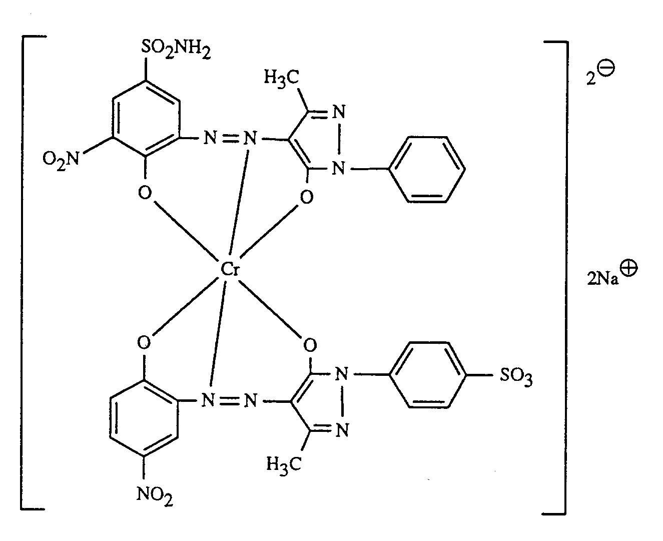
20,95 Teile des Azofarbstoffes aus diazotiertem 4-Nitro-2-aminophenol und 1-(4'-Sulfophenyl)-3-methylpyrazol-5-on sowie 20,9 Teile des Azofarbstoffes aus diazotiertem 6-Nitro-2-aminophenol-4-sulfonsäureamid und 1-Phenyl-3-methylpyrazol-5-on werden unter Zugabe von 0,75 Teilen Salicylsäure unter Rühren in 400 Teile Wasser eingetragen; die Suspension wird durch Zugabe von 50%iger Schwefelsäure auf pH 0,6 gestellt und mit 8,25 Teilen Chromsulfat versetzt. Das Reaktionsgemisch wird anschliessend im Autoklaven während 6 Stunden auf einer Temperatur von 130-135°C bei einem Innendruck von 2 bar gehalten. Nach Abkühlen auf ca. 90°C wird die Chromierungssuspension mit 30%iger Natriumhydroxydlösung auf pH 8,5-9,0 gestellt und anschliessend noch 2 Stunden bei 90°C nachgerührt. Der Farbstoff liegt als klare, rote Lösung vor und wird durch Einengen bis zur Trockne isoliert. Auf Leder werden volle, orangerote Färbungen erzielt.

Beispiel 6: 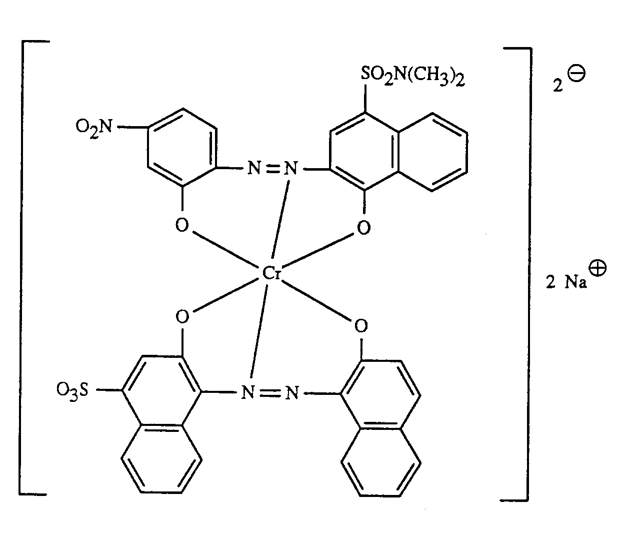
21,95 Teile des Azofarbstoffes aus diazotierter 1-Amino-2-hydroxynaphthalin-4-sulfonsäure und 2-Hydroxynaphthalin werden zusammen mit 20,8 Teilen des Azofarbstoffes aus diazotiertem 5-Nitro-2-aminophenol und 1-Hydroxynaphthalin-4-sulfonsäure-N,N-dimethylamid unter Zugabe von 0,5 Teilen Salicylsäure unter Rühren in 400 Teilen Wasser suspendiert. Nach Zugabe von 50%iger Schwefelsäure bis zum Erreichen eines pH-Wertes von 0,6 werden 8,25 Teile Chromsulfat zugegeben. Anschliessend wird die Reaktionsmischung im Autoklaven während 8 Stunden bei einer Innentemperatur von 135°C und einem Innendruck von 2,1 bar gerührt. Nach Abkühlen auf ca. 90°C wird die erhaltene Suspension mit 30%iger Natriumhydroxydlösung auf pH 8,5-9,0 gestellt und noch 2 Stunden bei 90-95°C nachgerührt. Aus der entstandenen klaren Lösung wird der asymmetrische 1:2-Chromkomplex durch Einengen im Vakuum bis zur Trockne isoliert. Der gut wasserlösliche Farbstoff färbt Wolle, Polyamidfasern oder Leder in vollen, rotstichigen Marineblautönen mit guten Allgemeinechtheiten.

Beispiel 7: 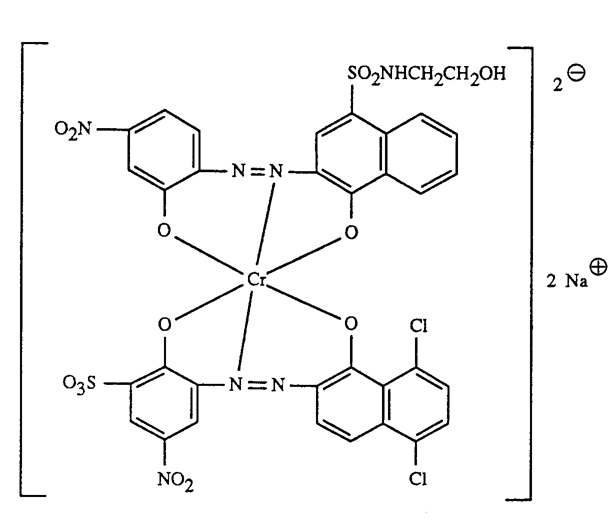
22,9 Teile des Azofarbstoffes aus diazotierter 4-Nitro-2-aminophenol-6-sulfonsäure und 5,8-Dichlor-1-hydroxynaphthalin sowie 21,6 Teile des Azofarbstoffes aus diazotiertem 5-Nitro-2-aminophenol und 1-Hydroxynaphthalin-4-(2'-hydroxyethyl)-sulfonsäureamid werden unter Zugabe von 0,5 Teilen Salicylsäure in 500 Teilen Wasser angeschlämmt. Durch Zugabe von 50%iger Schwefelsäure wird die Suspension auf pH 0,6 gestellt, mit 8,25 Teilen Chromsulfat versetzt und anschliessend im Autoklaven 8 Stunden lang bei einer Innentemperatur von 135°C gerührt. Nach Abkühlen auf 90°C wird die Reaktionsmasse mit 30%iger Natriumhydroxydlösung auf pH 8,5-9,0 gestellt und noch 2 Stunden bei 90-95°C gerührt. Aus der erhaltenen, tiefblauen Lösung wird der asymmetrische 1:2-Komplex durch Zugabe von Natriumchlorid abgeschieden, durch Filtration isoliert, mit verdünnter Natriumchloridiösung gewaschen und im Vakuum bei 80°C getrocknet. Der erhaltene Farbstoff ergibt auf Wolle, synthetischem Polyamidmaterial oder Leder ausgefärbt echte, dunkelblaue Nuancen.

### Färbevorschrift für Wolle

100 Teile Wollstrickgarn werden bei 50°C in ein Färbebad eingeführt, das auf 4000 Teile Wasser 2 Teile Farbstoffe des Beispiels 1,4 Teile Ammoniumsulfat und 2 Teile eines Egalisierhilfsmittels enthält. Die Flotte wird im Verlaufe von 45 Minuten zum Sieden gebracht und während weiteren 45 Minuten bei dieser Temperatur belassen. Darauf wird das rotgefärbte Garn herausgenommen, mit kaltem Wasser gründlich gespült und getrocknet.

### Färbevorschrift für Leder

100 Teile Bekleidungsverloursleder (Trockengewicht) werden bei 50°C in einer Lösung von 1000 Teilen Wasser und 2 Teilen Ammoniak 24 %ig während 2 Stunden aufgewalkt und anschliessend bei 60°C in einer Lösung von 1000 Teile Wasser, 2 Teilen Ammoniak 24 %ig und 6 Teilen Farbstoffe des Beispiels 1 während 1 Stunde gefärbt. Hierauf gibt man eine Lösung von 40 Teilen Wasser und 4 Teilen Ameisensäure 85 %ig zu und färbt noch weitere 30 Minuten. Dann werden die Leder gut gespült und gegebenenfalls noch mit 2 Teilen eines Dicyandiaminformaldehydkondensationsproduktes während 30 Minuten bei 50°C behandelt. In gleicher Weise lassen sich andere Veloursleder sowie Handschuhleder färben. Die so erhaltenen roten Färbungen zeichnen sich durch gute Echtheiten und gutes Deckvermögen aus.

### Färbevorschrift für Polyamid

100 Teile Gewebe aus texturiertem Polyamid (Nylon-6,6) werden bei 40 bis 50°C in ein Färbebad eingebracht, das auf 4000 Teile Wasser 2 Teile des im Beispiel 1 genannten Farbstoffes, 1,5 Teile eines Egalisiermittels auf Basis eines Ethoxylierungsprodukts und 4 Teile Ammoniumacetat enthält. Das Färbebad wird mit 80 %iger Essigsäure auf pH 4,5 gestellt.

Das Färbebad wird innert 45 Minuten zum Sieden erhitzt und weitere 60 Minuten bei dieser Temperatur belassen. Das nach Abkühlen auf 80°C entnommene Polyamidgewebe ist nach Spülen und Trocknen in einem roten Farbton gefärbt.

## Patentansprüche

1. Verfahren zur Herstellung von zu mindestens 85 %, insbesondere 90 %, reinen mindestens zwei wasserlöslichmachende Gruppen enthaltenden asymmetrischen 1:2-Chromkomplexfarbstoffen, dadurch gekennzeichnet, dass man ein Gemisch zweier Farbstoffe der Formeln
F₁-(SO₃H)ₜ (1)
und
F₂-SO₂-Y (2),
worin F₁ und F₂ unabhängig voneinander je für den Rest eines metallisierbaren Azo- oder Azomethinfarbstoffes stehen, Y gegebenenfalls substituiertes Amino, Aryloxy oder Alkyl bedeutet und t 1 oder 2 ist, im molaren Verhältnis von 0,85:1,0 bis 1,2:1,0 in einem Eintopfverfahren mit einem chromabgebenden Mittel unter Druck bei einer Temperatur oberhalb von 100°C und einem pH-Wert zwischen 0 und 2 umsetzt und anschliessend die Umsetzung bei einem leicht sauren, neutralen oder leicht alkalischen pH-Wert weiterführt.

2. Verfahren gemäss Anspruch 1, dadurch gekennzeichnet, dass man als Temperatur oberhalb von 100°C eine Temperatur von 100 bis 150°C, insbesondere 125 bis 135°C, wählt.

3. Verfahren gemäss einem der Ansprüche 1 oder 2, dadurch gekennzeichnet, dass man als pH-Wert zwischen 0 und 2 einen pH-Wert von 0 bis 1, insbesondere 0,3 bis 0,7 wählt.

4. Verfahren gemäss einem der Ansprüche 1 bis 3, dadurch gekennzeichnet, dass man für die Weiterführung der Umsetzung bei einem leicht sauren, neutralen oder schwach alkalischen pH-Wert eine Temperatur unterhalb von 100°C, insbesondere von 60 bis 100°C, und vorzugsweise von 90 bis 95°C, wählt.

5. Verfahren gemäss Anspruch 4, dadurch gekennzeichnet, dass man als leicht sauren, neutralen oder leicht alkalischen pH-Wert einen pH-Wert von 5 bis 10, insbesondere 6 bis 9, wählt.

6. Verfahren gemäss einem der Ansprüche 1 bis 5, dadurch gekennzeichnet, dass man ein Gemisch zweier metallisierbarer Ausgangsfarbstoffe im molaren Verhältnis von 0,95:1,0 bis 1,05:1,0, insbesondere im Verhältnis von 1:1, verwendet.

7. Verfahren gemäss einem der Ansprüche 1 bis 6, dadurch gekennzeichnet, dass man unter einem Druck von 1 bis 5 bar, vorzugsweise 1 bis 3 bar, chromiert.

8. Verfahren gemäss einem der Ansprüche 1 bis 7, dadurch gekennzeichnet, dass man einen Ueberschuss von 1 bis 5 Mol % an chromabgebendem Mittel verwendet.

9. Verfahren gemäss einem der Ansprüche 1 bis 8, dadurch gekennzeichnet, dass die Umsetzung der metallfreien Ausgangsfarbstoffe mit dem chromabgebenden Mittel in wässrigem Medium erfolgt.

10. Verfahren gemäss einem der Ansprüche 1 bis 9, dadurch gekennzeichnet, dass man die Chromierung in Gegenwart katalytischer Mengen von Hilfskomplexverbindungen, insbesondere Weinsäure, Milchsäure, Zitronensäure oder Glykolsäure oder vorzugsweise Salicylsäure, durchführt.

11. Verfahren gemäss einem der Ansprüche 1 bis 10, dadurch gekennzeichnet, dass F₁ und F₂ unabhängig voneinander je den Rest eines metallisierbaren Azofarbstoffes bedeuten.

12. Verfahren gemäss einem der Ansprüche 1 bis 11, dadurch gekennzeichnet, dass man als Azofarbstoffe Mono- oder Disazofarbstoffe verwendet, die Diazokomponenten und Kupplungskomponenten der Benzol-, Naphthalin- oder heterocyclischen Reihe enthalten.

13. Verfahren gemäss einem der Ansprüche 1 bis 12, dadurch gekennzeichnet, dass Y für einen unsubstituierten oder durch Alkyl, Cycloalkyl, Aralkyl und/oder Aryl mono- oder disubstituierten Aminorest, für einen unsubstituierten oder durch C₁-C₄-Alkyl, C₁-C₄-Alkoxy, Halogen oder Nitro substituierten Phenoxyrest oder für einen C₁-C₄-Alkylrest steht.

14. Verfahren gemäss einem der Ansprüche 1 bis 13, dadurch gekennzeichnet, dass Y ein unsubstituierter oder durch C₁-C₄-Alkyl, C₁-C₄-Hydroxyalkyl, Cyclohexyl, C₇-C₁₂-Aralkyl und/oder gegebenenfalls durch C₁-C₄-Alkyl, C₁-C₄-Alkoxy, Halogen oder Nitro substituiertes Phenyl mono- oder disubstituierter Aminorest ist.

15. Verfahren gemäss einem der Ansprüche 1 bis 14, dadurch gekennzeichnet, dass Y für einen Rest der Formel 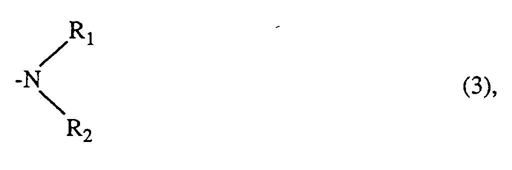 worin R₁ Wasserstoff oder C₁-C₄-Alkyl und R₂ Wasserstoff, C₁-C₄-Alkyl, C₁-C₄-Hydroxyalkyl oder gegebenenfalls durch Methoxy, Methyl, Chlor oder Nitro substituiertes Phenyl sind, steht.

16. Verfahren gemäss einem der Ansprüche 1 bis 15, dadurch gekennzeichnet, dass Y den Rest -NH₂ bedeutet.

17. Verfahren gemäss einem der Ansprüche 1 bis 16, dadurch gekennzeichnet, dass man ein Gemisch der Azofarbstoffe, die in Form der freien Säure den Formeln 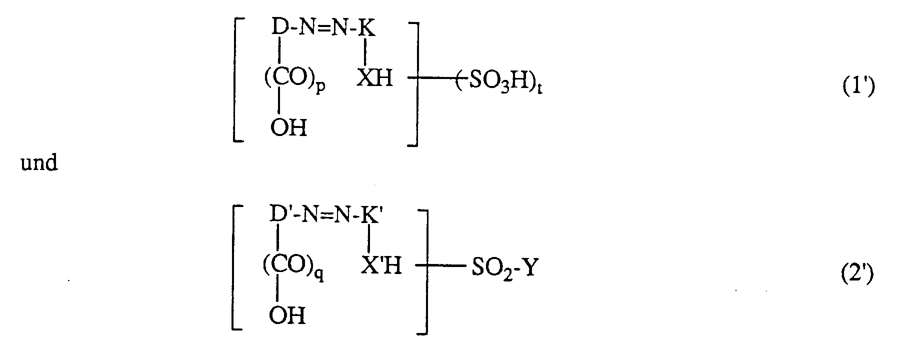 entsprechen,
worin D und D' unabhängig voneinander je den Rest einer Diazokomponente der Benzol- oder Naphthalinreihe mit zur Azogruppe o-ständiger Hydroxy- oder Carboxygruppe bedeuten, K und K' unabhängig voneinander je den Rest einer Kupplungskomponente der Benzol- oder Naphthalinreihe oder der heterocyclischen Reihe darstellen, wobei die Kupplungskomponente die Gruppe -XH bzw. -X'H in o- bzw. α-Stellung zur Azogruppe aufweist, die Gruppen -XH und -X'H unabhängig voneinander -OH oder -NHR, worin R Wasserstoff oder C₁-C₄-Alkyl ist, bedeuten, p und q unabhängig voneinander für 0 oder 1 stehen und Y und t die im Anspruch 1 angegebene Bedeutung haben, verwendet.

18. Verfahren gemäss einem der Ansprüche 1 bis 17, dadurch gekennzeichnet, dass man ein Gemisch der Azofarbstoffe, die in Form der freien Säure den Formeln 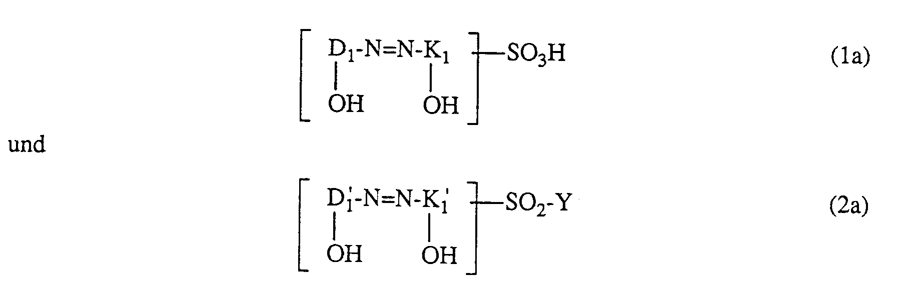 entsprechen, verwendet, worin D₁ und D'₁ unabhängig voneinander den Rest eines 2-Aminophenols, 1-Amino-2-naphthols oder 2-Amino-1-naphthols, wobei die genannten aromatischen Amine unsubstituiert oder durch Nitro, Chlor, Methyl oder Methoxy weitersubstituiert sein können, bedeuten, K₁ und K'₁ unabhängig voneinander
a) je einen Rest der Formel 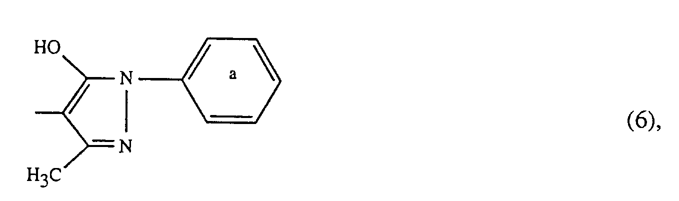 worin der Phenylrest (a) unsubstituiert oder durch C₁-C₄-Alkyl, C₁-C₄-Alkoxy, Nitro oder Halogen substituiert ist, oder
b) je einen Rest der Formel 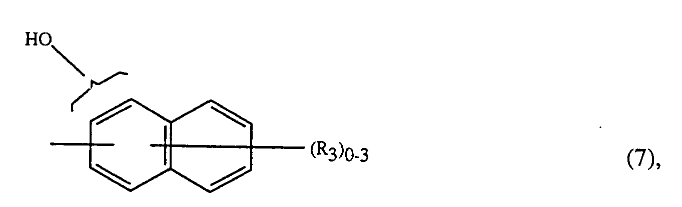 worin R₃ für 0 bis 3 Substituenten ausgewählt aus der Gruppe C₁-C₄-Alkyl, Halogen, C₂-C₄-Alkanoylamino, Benzoylamino, C₁-C₂Alkylsulfonylamino oder unsubstituiertes oder durch Methyl, Methoxy oder Chlor substituiertes Phenylamino steht, bedeuten und Y die im Anspruch 15 angegebene Bedeutung hat, und worin der Rest D₁ oder K₁ die Sulfogruppe und der Rest D'₁ oder K'₁ die -SO₂-Y-Gruppe trägt.

19. Verfahren gemäss einem der Ansprüche 1 bis 18, dadurch gekennzeichnet, dass man vor der Chromierung bei pH 0 bis 2 die definierten metallisierbaren Ausgangsfarbstoffe in einem Eintopfverfahren mit einem chromabgebenden Mittel bei pH 3 bis 4 vorbehandelt.

20. Verwendung der nach dem Verfahren gemäss den Ansprüchen 1 bis 19 hergestellten 1:2-Chromkomplexfarbstoffe zum Färben oder Bedrucken natürlicher oder synthetischer Fasermaterialien, insbesondere natürlicher oder synthetischer Polyamidfasermaterialien.

## Claims

1. A process for the preparation of asymmetric 1:2 chromium complex dyes which are at least 85% pure and particularly 90% pure and contain at least two groups which impart solubility in water, which process comprises reacting a mixture of two dyes of the formulae
F₁-(SO₃H)ₜ (1)
and
F₂-SO₂-Y (2)
in which F₁ and F₂ independently of one another are each the radical of a metallizable azo or azomethine dye, Y is amino, aryloxy or alkyl each of which is substituted or unsubstituted, and t is 1 or 2, in a molar ratio of 0.85:1.0 to 1.2:1.0 in a one-pot process with a chromium donor under pressure at a temperature above 100°C and at a pH between 0 and 2, and then continuing the reaction at a slightly acid, neutral or slightly alkaline pH.

2. A process according to claim 1, wherein a temperature of 100 to 150°C, in particular 125 to 135°C, is selected as the temperature above 100°C.

3. A process according to either of claims 1 and 2, wherein a pH of 0 to 1, in particular 0.3 to 0.7 is selected as the pH between 0 and 2.

4. A process according to any one of claims 1 to 3, wherein a temperature below 100°C, in particular from 60 to 100°C and preferably from 90 to 95°C, is selected for the continuation of the reaction at a slightly acid, neutral or slightly alkaline pH.

5. A process according to claim 4, wherein a pH of 5 to 10, in particular 6 to 9, is selected as the slightly acid, neutral or slightly alkaline pH.

6. A process according to any one of claims 1 to 5, wherein a mixture of two metallizable starting dyes in a molar ratio of 0.95:1.0 to 1.05:1.0, in particular in a ratio of 1:1, is used.

7. A process according to any one of claims 1 to 6, wherein chroming is carried out under a pressure of 1 to 5 bar, preferably 1 to 3 bar.

8. A process according to any one of claims 1 to 7, wherein an excess of 1 to 5 mol% of chromium donor is used.

9. A process according to any one of claims 1 to 8, wherein the reaction of the metal-free starting dyes with the chromium donor is carried out in an aqueous medium.

10. A process according to any one of claims 1 to 9, wherein the chroming is carried out in the presence of catalytic amounts of auxiliary complex compounds, in particular tartaric acid, lactic acid, citric acid or glycolic acid or, preferably, salicylic acid.

11. A process according to any one of claims 1 to 10, wherein F₁ and F₂ independently of one another are each the radical of a metallizable azo dye.

12. A process according to any one of claims 1 to 11, wherein the azo dyes used are monoazo or disazo dyes containing diazo components and coupling components of the benzene, naphthalene or heterocyclic series.

13. A process according to any one of claims 1 to 12, wherein Y is an amino radical which is unsubstituted or monosubstituted or disubstituted by alkyl, cycloalkyl, aralkyl and/or aryl, a phenoxy radical which is unsubstituted or substituted by C₁-C₄alkyl, C₁-C₄alkoxy, halogen or nitro, or a C₁-C₄alkyl radical.

14. A process according to any one of claims 1 to 13, wherein Y is an amino radical which is unsubstituted or monosubstituted or disubstituted by C₁-C₄alkyl, C₁-C₄hydroxyalkyl, cyclohexyl, C₇-C₁₂aralkyl and/or phenyl which is unsubstituted or substituted by C₁-C₄alkyl, C₁-C₄alkoxy, halogen or nitro.

15. A process according to any one of claims 1 to 14, wherein Y is a radical of the formula 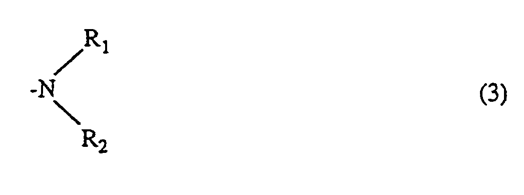 in which R₁ is hydrogen or C₁-C₄alkyl and R₂ is hydrogen, C₁-C₄alkyl, C₁-C₄hydroxyalkyl or phenyl which is unsubstituted or substituted by methoxy, methyl, chlorine or nitro.

16. A process according to any one of claims 1 to 15, wherein Y is the radical -NH₂.

17. A process according to any one of claims 1 to 16, which comprises using a mixture of the azo dyes which, in the form of the free acid, have the formulae 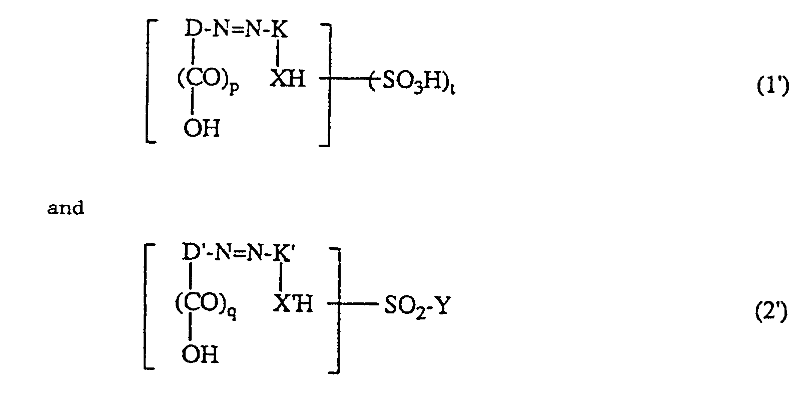 in which D and D' independently of one another are each the radical of a diazo component of the benzene or naphthalene series containing a hydroxyl or carboxyl group in the o-position relative to the azo group, K and K' independently of one another are each the radical of a coupling component of the benzene or naphthalene series or of the beterocyclic series, the coupling component having the group -XH or -X'H in the o-position or α-position relative to the azo group, the groups -XH and -X'H independently of one another being -OH or -NHR in which R is hydrogen or C₁-C₄alkyl, p and q independently of one another are 0 or 1 and Y and t are as defined in claim 1.

18. A process according to any one of claims 1 to 17, which comprises using a mixture of the azo dyes which, in the form of the free acid, have the formulae 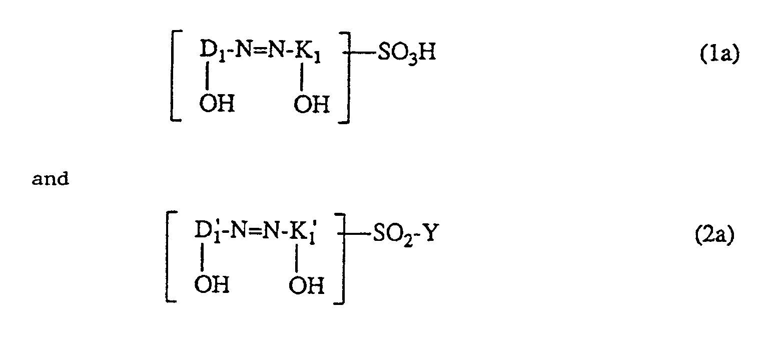 in which D₁ and D'₁ independently of one another are the radical of a 2-aminophenol, 1-amino-2-naphthol or 2-amino-1-naphthol, it being possible for the said aromatic amines to be unsubstituted or to be further substituted by nitro, chlorine, methyl or methoxy, K₁ and K'₁ independently of one another are each
a) a radical of the formula 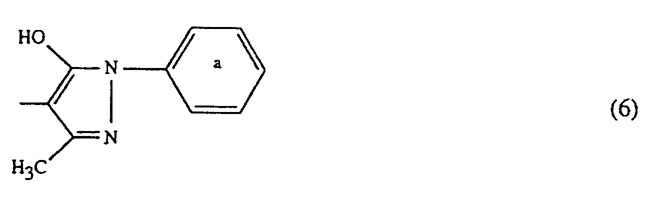 in which the phenyl radical (a) is unsubstituted or substituted by C₁-C₄alkyl, C₁-C₄alkoxy, nitro or halogen, or
b) a radical of the formula 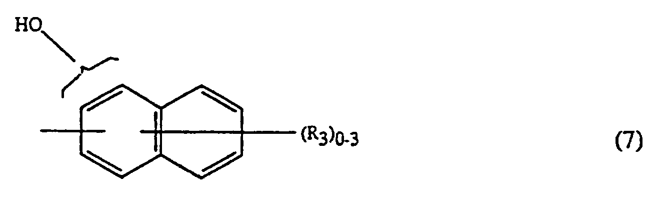 in which R₃ is 0 to 3 substituents selected from the group C₁-C₄alkyl, halogen, C₂-C₄alkanoylamino, benzoylamino, C₁-C₂alkyl sulfonylamino and phenylamino which is unsubstituted or substituted by methyl, methoxy or chlorine, and Y is as defined in claim 15 and the radical D₁ or K₁ carries the sulfo group and the radical D'₁ or K'₁ carries the -SO₂-Y group.

19. A process according to any one of claims 1 to 18, wherein, before the chroming at pH 0 to 2, the metallizable starting dyes defined are pretreated at pH 3 to 4 with a chromium donor in a one-pot process.

20. The use of the 1:2 chromium complex dyes prepared by the process according to claims 1 to 19 for dyeing or printing natural or synthetic fibre materials, in particular natural or synthetic polyamide fibre materials.

## Revendications

1. Procédé de préparation de complexes chrome-colorant 1:2 asymétriques, purs au moins à 85 %, en particulier à 90 %, portant au moins deux groupes les rendant hydrosolubles, caractérisés en ce que l'on fait réagir un mélange de deux colorants de formule
F₁-(SO₃H)ₜ (1)
et
F₂-SO₂-Y (2),
dans lesquelles F₁ et F₂ représentent indépendamment l'un de l'autre le résidu d'un colorant azoïque ou azométhinique métallable, Y représente un groupe alkyle, aryloxy ou amino éventuellement substitué, et t est égal à 1 ou 2, dans un rapport molaire compris entre 0,85:1 et 1,2:1,0 dans un procédé à étape unique, avec un agent libérant du chrome, sous pression à une température supérieure à 100 °C et à un pH compris entre 0 et 2, et que l'on poursuit ensuite la réaction à un pH légèrement acide, neutre ou alcalin.

2. Procédé conforme à la revendication 1, caractérisé en ce que l'on choisit comme température supérieure à 100 °C une température comprise entre 100 et 150 °C, en particulier entre 125 et 135 °C.

3. Procédé conforme à une des revendications 1 ou 2, caractérisé en ce que l'on choisit comme pH entre 0 et 2 un pH compris entre 0 et 1, en particulier entre 0,3 et 0,7.

4. Procédé conforme à une des revendications 1 à 3, caractérisé en ce que l'on choisit pour la continuation de la réaction à un pH faiblement acide, neutre ou faiblement alcalin une température inférieure à 100 °C, en particulier entre 60 et 100 °C, et de préférence entre 90 et 95 °C.

5. Procédé conforme à la revendication 4, caractérisé en ce que l'on choisit comme pH faiblement acide, neutre ou faiblement basique un pH de 5 à 10, en particulier de 6 à 9.

6. Procédé conforme à une des revendications 1 à 5, caractérisé en ce que l'on utilise un mélange de deux colorants de départ métallables avec un rapport molaire de 0,95:1,0 à 1,05:1,0, en particulier égal à 1:1.

7. Procédé conforme à une des revendications 1 à 6, caractérisé en ce que la chromation est réalisée sous une pression comprise entre 1 et 5 bar, de préférence entre 1 et 3 bars.

8. Procédé conforme à une des revendications 1 à 7, caractérisé en ce que l'on utilise un excès d'agent libérant du chrome de 1 à 5 % en moles.

9. Procédé conforme à une des revendications 1 à 8, caractérisé en ce que la réaction des colorants de départ métallables avec l'agent libérant du chrome est réalisée dans un milieu aqueux.

10. Procédé conforme à une des revendications 1 à 9, caractérisé en ce que la chromation est effectuée en présence de quantités catalytiques de composés complexes adjuvants, comme par exemple l'acide tartrique, l'acide lactique, l'acide citrique ou l'acide hydroxyacétique ou en particulier l'acide salicylique.

11. Procédé conforme à une des revendications 1 à 10, caractérisé en ce que F₁ et F₂ représentent, indépendamment l'un de l'autre, le résidu d'un colorant azoïque métallable.

12. Procédé conforme à une des revendications 1 à 11, caractérisé en ce que l'on utilise comme colorants azoïques des colorants mono- ou disazoïques, contenant des composants diazo et copulants de la série benzénique, naphtalénique ou hétérocyclique.

13. Procédé conforme à une des revendications 1 à 12, caractérisé en ce que Y représente un résidu amino non substitué ou mono- ou disubstitué par un groupe alkyle, cycloalkyle, aralkyle et/ou aryle, un résidu phénoxy non substitué ou substitué par un groupe alkyle en C₁-C₄, alcoxy en C₁-C₄, halogène ou nitro ou un résidu alkyle en C₁-C₄.

14. Procédé conforme à une des revendications 1 à 13, caractérisé en ce que Y représente un groupe amino non substitué ou mono- ou disubstitué par un résidu alkyle en C₁-C₄, hydroxyalkyle en C₁-C₄, cyclohexyle, aralkyle en C₇-C₁₂, ou phényle, lui même substitué éventuellement par un résidu alkyle en C₁-C₄, alcoxy en C₁-C₄, halogène ou nitro.

15. Procédé conforme à une des revendications 1 à 14, caractérisé en ce que Y représente un résidu de formule 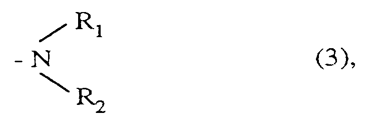 dans laquelle R₁ représente un atome d'hydrogène ou un groupe alkyle en C₁-C₄, et R₂ un atome d'hydrogène ou un groupe alkyle en C₁-C₄, hydroxyalkyle en C₁-C₄, ou un groupe phényle portant éventuellement un substituant méthyle, méthoxy, chlore ou nitro.

16. Procédé conforme à une des revendications 1 à 15, caractérisé en ce que Y représente un résidu -NH₂.

17. Procédé conforme à une des revendications 1 à 16, caractérisé en ce que l'on utilise un mélange de colorants azoïques qui, sous forme d'acide libre, correspondent à la formule 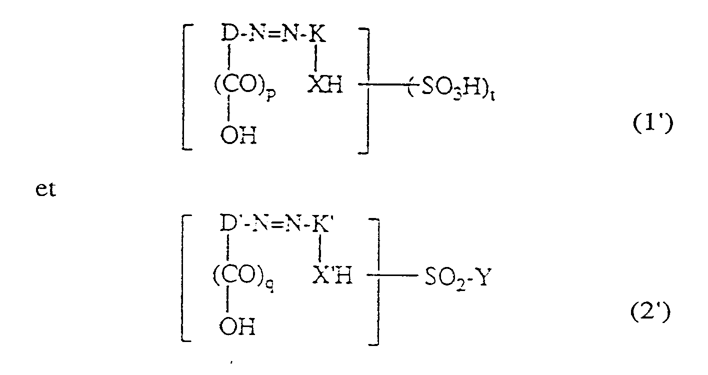 dans lesquelles D et D' représentent indépendamment l'un de l'autre le résidu du composant diazo de la série benzénique ou naphtalénique portant un position ortho du groupe azo un résidu hydroxy ou carboxy, K et K' représentent indépendamment l'un de l'autre le résidu d'un copulant de la série benzénique, naphtalénique ou hétérocyclique, le copulant portant en position ortho ou α du groupe azo un résidu -XH ou -X'H, les groupes -XH ou -X'H représentant indépendamment l'un de l'autre un groupe -OH ou -NHR, dans lequel R est un atome d'hydrogène ou un alkyle en C₁-C₄, p et q sont indépendamment l'un de l'autre égal à 0 ou 1, et Y et t ont la signification indiquée dans la revendication 1.

18. Procédé conforme à une des revendications 1 à 17, caractérisé en ce que l'on utilise un mélange de colorants azoïques, qui correspondent sous forme d'acide libre aux formules 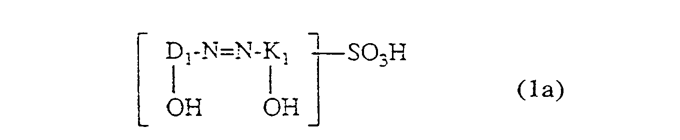 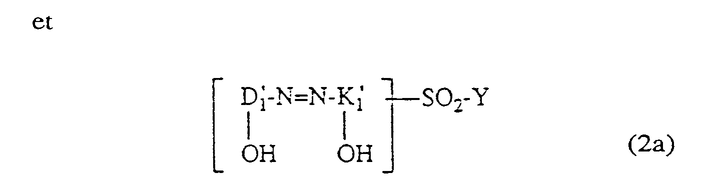 dans lesquelles D₁ et D'₁ représentent indépendamment l'un de l'autre le résidu d'un 2-aminophénol, 1-amino-2-naphtol ou 2-amino-1-naphtol, les amines aromatiques en questions pouvant être non substituées ou porter par exemple des substituants nitro, chlore, méthyle ou méthoxy,
K₁ et K'₁ représentent indépendamment
a) un résidu de formule 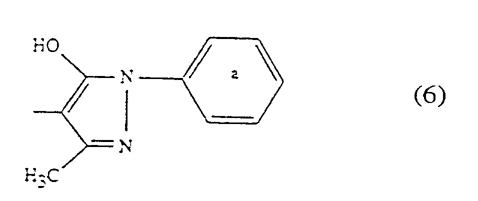 dans laquelle le noyau phényle peut être non substitué ou substitué par une alkyle en C₁-C₄, alcoxy en C₁-C₄, nitro ou halogène, ou
b) un résidu de formule 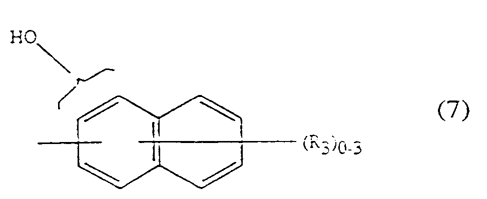 dans laquelle R₃ représente de 0 à 3 substituants, choisis dans le groupe constitué des substituants alkyle en C₁-C₄, halogène, alkanoylamino en C₂-C₄, benzoylamino, alkylsulfonylamino en C₁-C₂, ou phénylamino non substitué ou dont le noyau phényle est substitué par un méthyle, méthoxy ou chlore, et dans le cas de -K-XH, un sulfo, et dans le cas de -K'-X'H, un résidu -SO₂-Y.

19. Procédé conforme à une des revendications 1 à 18, caractérisé en ce que l'on soumet les colorants de départ métallables en question, avant la chromation à pH 0 - 2, à un prétraitement dans un procédé dans un seul récipient, à pH 3 - 4 en présence d'un agent libérant du chrome.

20. Utilisation des complexes chrome-colorants 1:2 asymétriques préparés conformément aux revendications 1 à 19, pour la teinture ou l'impression de matériaux fibreux naturels ou synthétiques, en particulier de matériaux fibreux naturels ou synthétiques en polyamide.
